# FASCICULE DE BREVET EUROPEEN

(11) **EP 1 610 584 B1**
(45) Date de publication et mention de la délivrance du brevet: **01.09.2010**
(21) Numéro de dépôt: 05291068.4
(22) Date de dépôt: 18.05.2005
(51) Int. Cl.: H04W 36/14

(54) **Procédé et système de calcul du voisinage 2G-3G pour un transfert automatique de connexion entre des systèmes 2G et 3G**
Verfahren und System zur Berechnung der 2G-3G Nachbarschaft für ein automatisches Weiterreichen der Verbindung zwischen 2G-3G Systemen
Method and system for calculating 2G-3G neighbourhood for performing an handover between 2G-3G systems

(30) Priorité: 22.06.2004 FR 0406753
(43) Date de publication de la demande: 28.12.2005
(73) Titulaire: Societé Française du Radiotéléphone, 75008 Paris (FR)
(72) Inventeur: Doumenc, Didier, 92320 Chatillon (FR); Fattouch, Imad, 75013 Paris (FR); Serre, Soudabeh, 78420 Carrières sur Seine (FR); Vincent, François, 92140 Clamart (FR)
(74) Mandataire: Debay, Yves

(56) Documents cités:
- EP-A- 1 335 528
- EP-A- 1 377 095
- US-A1- 2002 037 726
- US-A1- 2004 109 431

## Description

La présente invention concerne les réseaux de radiotéléphonie cellulaire, et plus particulièrement, dans le but d'améliorer la couverture radio dans un réseau géré par un opérateur, un procédé et système de calcul du voisinage 2G-3G pour permettre le transfert automatique de connexion entre des systèmes 2G (par exemple GSM, GPRS, CDMA, etc.) et 3G (UMTS).

Un réseau de radiotéléphonie cellulaire est constitué d'une pluralité de stations radioélectriques terrestres de base dotées d'émetteurs-récepteurs qui assurent la couverture radio de zones définissant des cellules respectives. Un système de communication par radiotéléphonie cellulaire très répandu est aujourd'hui le système CDMA (accès multiple à répartition par les codes). L'utilisation des techniques CDMA d'étalement du spectre permet d'offrir des débits élevés pour les terminaux mobiles. Le standard CDMA le plus récent (par exemple Wide Band CDMA : W-CDMA), dit de troisième génération (3G), est ainsi en phase de déploiement pour de nombreux opérateurs. Les terminaux mobiles se doivent par conséquent d'être plus compatibles à la fois avec les "anciens" systèmes de seconde génération (2G) et les nouveaux systèmes 3G.

Dans un réseau typique de radiotéléphonie cellulaire, un terminal mobile peut communiquer avec la station de base ayant le signal disponible le plus fort. Afin de suivre les signaux disponibles, le terminal mobile dispose d'une liste des stations de base disponibles, mise à jour en permanence. En général, chaque station de base du système transmet des signaux permettant au terminal mobile de déterminer la station ayant le signal le plus fort. Cette détermination est permise grâce à un module de gestion des ressources radio du terminal mobile, disposant de moyens pour détecter et mesurer l'intensité des signaux.

Les résultats du module de gestion des ressources radio sont transmis à la station de base active, qui donne en retour des instructions au terminal mobile pour mettre à jour la liste des stations de base disponibles. Dès que le terminal mobile s'éloigne d'une cellule, celui-ci doit accéder à une nouvelle station de base, déterminée notamment à partir de la liste des stations de base disponibles. Le transfert ou handover doit être réalisé avant que la connexion ne s'interrompe avec l'ancienne station de base pour assurer une continuité de la communication et parvenir à une entière transparence pour l'utilisateur. Dans le cas du "softer handover" pour lequel le terminal mobile se trouve dans une zone de couverture commune à deux secteurs adjacents d'une même station de base, le transfert est réalisé par sélection d'un émetteur-récepteur différent de la station de base. Dans tous les cas, les communications entre les différents émetteurs-récepteurs et le terminal mobile empruntent simultanément deux canaux radio. Il s'agit donc d'un type de handover conservant la fréquence. Il existe également des "hard handover", qui sont du type inter-fréquences (permettant à un mobile par exemple de passer d'une fréquence W-CDMA à une autre) ou du type inter-systèmes (permettant à un mobile de passer d'un système à un autre, comme par exemple du W-CDMA au GSM).

Dans la plupart des systèmes actuels de communication par radiotéléphonie cellulaire, le handover ne peut pas se produire correctement entre des systèmes de différentes générations. Dans la mesure où les systèmes utilisent des schémas de modulation et des vitesses de propagation différentes, ils ne sont pas naturellement compatibles au niveau de la couche physique. Cela représente un problème pour l'utilisateur d'un système 3G comportant des trous de couverture, qui pourraient être comblés par le recours à un système 2G déjà en place. Il semble donc souhaitable de permettre de passer d'une couverture de réseau à l'autre, dans chacun des systèmes 2G et 3G, sans rencontrer des inconvénients d'interruptions lors du handover.

Il est connu dans l'art antérieur, par le document US 6 567 666, une méthode de handover entre systèmes CDMA de différentes générations, dans laquelle la station de base "active" reçoit de la part du terminal mobile des mesures de la force de chacun des signaux de pilote répertoriés dans une liste incluant les signaux de pilote des stations de base voisines, puis transmet au terminal mobile un message fournissant d'une part la sélection d'un quelconque des signaux de pilote reçus ayant un niveau supérieur à un seuil défini et d'autre part des données de paramètres et de configuration permettant de configurer le terminal mobile avant de déclencher un handover.

Un inconvénient de ce type de méthodes est qu'aucune caractéristique autre que le niveau de champ n'est prise en compte pour sélectionner la station de base vers laquelle on bascule. Autrement dit, il n'est pas possible d'optimiser l'utilisation du réseau. En outre, il n'est pas permis de hiérarchiser les différentes couches, comme par exemple parmi les types de fréquences du GSM, avec la bande de fréquences à 900 Mhz, la bande de fréquences à 1800 Mhz et la bande de fréquence additionnelle prévue pour les micro-cellules. Il existe donc un besoin de trouver une méthode plus adaptée à la réalité du terrain, permettant d'efficacement configurer le réseau pour réaliser un handover vers la meilleure cellule serveuse.

La présente invention a donc pour premier objet de supprimer un ou plusieurs des inconvénients de l'art antérieur en définissant un procédé de calcul du voisinage 2G-3G qui permet, en tenant compte de données de couverture, de trafic et de qualité de service de fournir une solution adéquate et efficace pour paramétrer le transfert automatique de connexion entre des systèmes 2G et 3G.

Un autre objet de l'invention est de permettre, dans le cadre du calcul de voisinage 2G-3G, de hiérarchiser les bandes de fréquences disponibles pour favoriser un basculement vers des fréquences prioritaires.

A cet effet, l'invention concerne un procédé de calcul du voisinage 2G-3G pour permettre le paramétrage d'un transfert automatique de connexion entre des systèmes de génération différente lorsqu'un terminal mobile radio bimode se déplace entre de tels systèmes, mis en oeuvre dans un réseau de radiotéléphonie cellulaire par un équipement informatique, comprenant une étape préalable de modélisation comportant le découpage du réseau en une pluralité de cellules radio générées par des moyens d'émission/réception de stations de base du réseau, le découpage distinguant les bandes de fréquence utilisées dans chacune des cellules, l'équipement informatique mémorisant dans des moyens de mémorisation des données de couverture en tout point du réseau, caractérisé en ce qu'il comporte une étape dite de hiérarchisation utilisant les données de couverture pour produire dans des tables de hiérarchie, pour chaque bande de fréquences au sein du réseau découpé, des données de meilleure cellule serveuse et d'au moins de meilleure seconde cellule serveuse respectivement représentatives d'un index répertoriant des zones de cellules radio correspondant au meilleur niveau de couverture, respectivement au meilleur second niveau de couverture, le procédé comprenant en outre :
- une étape de configuration comprenant le stockage dans un fichier de configuration de paramètres de calcul,
- une étape de détermination de la zone de cellules radio et de la bande de fréquences "source" utilisées dans un premier système par le terminal mobile radio bimode, suivie d'une étape de sélection dans les tables de hiérarchie d'au moins une cellule de départ correspondant à cette zone et à la bande de fréquences "source" déterminée,
- une étape de génération à partir des tables de hiérarchie d'une liste de cellules dites candidates appartenant à un deuxième système et voisines de ladite cellule de départ,
- une étape de sélection dans la liste de candidates d'au moins une cellule d'arrivée en fonction d'au moins un critère de sélection.

Selon une autre particularité, l'étape de génération de la liste de cellules candidates comprend une étape de calcul, pour chacune des cellules voisines du deuxième système, de la surface de recouvrement avec la cellule de départ et une étape de pondération de la surface de recouvrement en fonction de donnée géomarketing associées à la cellule voisine considérée.

Selon une autre particularité, l'étape de génération de la liste de cellules candidates comprend une étape de discrimination des cellules voisines du deuxième système ayant un pourcentage de recouvrement avec la cellule de départ inférieur à un seuil de pourcentage paramétré lors de l'étape de configuration.

Selon une autre particularité, l'étape de hiérarchisation comprend, pour chaque bande de fréquences, une étape de création d'une première carte numérique de cellules meilleures serveuses et d'une seconde carte numérique de cellules secondes meilleures serveuses, lesdites première et seconde cartes comprenant un découpage en zones distinctes sans recouvrement, de façon à associer à n'importe quel point du réseau un unique couple cellule meilleure serveuse et seconde cellule meilleure serveuse par bande de fréquences.

Selon une autre particularité, l'étape de sélection d'une cellule de départ commence par une présélection dans les tables de hiérarchie de la meilleure cellule serveuse et au moins de la meilleure seconde cellule serveuse correspondant à la bande de fréquences "source" déterminée et à la zone où se situe le terminal, puis aboutit à la sélection d'une cellule de départ uniquement si le niveau de champ d'une cellule présélectionnée excède un premier seuil prédéterminé.

Selon une autre particularité, l'étape de sélection de cellules d'arrivée comprend une étape de validation des cellules candidates par comparaison du niveau de champ de chacune de ces candidates à un second seuil prédéterminé pour parvenir à la sélection d'une cellule d'arrivée uniquement si le niveau de champ d'une des candidates excède ledit second seuil.

L'invention permet ainsi de sélectionner une cellule ayant un niveau de champ suffisamment élevé pour permettre la réalisation du handover inter-systèmes, une cellule meilleure seconde serveuse pouvant être choisie en cas de défaillance ou incertitude pour la cellule meilleure serveuse.

Selon une autre particularité, l'étape de modélisation comporte un découpage répartissant les cellules du réseau de radiotéléphonie cellulaire entre un premier système de type GSM avec au moins deux bandes de fréquences différentes et un deuxième système de type W-CDMA avec au moins une bande de fréquences

Selon une autre particularité, lorsque ledit deuxième système prévoit des bandes de fréquences différentes, un niveau de priorité défini lors d'une étape de définition de priorité est associé à chacune des bandes de fréquences de ce deuxième système pour servir de critère de sélection lors de ladite étape de sélection dans la liste de cellules candidates.

Selon une autre particularité, le procédé selon l'invention comporte une première étape de comparaison pour comparer à un premier seuil maximum de décalage prédéterminé la différence de niveau de champ entre la meilleure cellule serveuse et la meilleure seconde cellule serveuse présélectionnées lors de l'étape de sélection dans les tables de hiérarchie, le dépassement de ce premier seuil maximum déclenchant une étape d'élimination de la meilleure seconde cellule serveuse, de façon à sélectionner comme cellule de départ la meilleure cellule serveuse.

Selon une autre particularité, le procédé selon l'invention comporte une seconde étape de comparaison concernant au moins une bande de fréquences dudit deuxième système pour comparer à un second seuil maximum de décalage prédéterminé la différence de niveau de champ entre la meilleure cellule serveuse et la meilleure seconde cellule serveuse extraites de la liste de cellules candidates, le dépassement de ce second seuil maximum correspondant à un critère de non-sélection déclenchant une étape d'élimination de cette meilleure seconde cellule lors de l'étape de sélection de cellules d'arrivée.

Selon une autre particularité, l'étape de génération de la liste de cellules candidates se limite à un nombre seuil de cellules candidates déterminé paramétré lors d'une deuxième étape de paramétrage.

Selon une autre particularité, l'étape de génération de la liste de cellules candidates comprend une étape de détection de cellules appartenant au deuxième système et issues du même site ou secteur d'émission-réception que la cellule de départ.

Selon une autre particularité, l'étape de calcul tient compte d'un niveau de champ minimum pour définir la surface de recouvrement de chacune des cellules voisines, l'étape de pondération de la surface de recouvrement prenant en compte un coefficient de pondération représentatif du type de sursol et/ou de la densité de trafic dans la cellule.

Selon une autre particularité, l'étape de sélection dans la liste de candidates utilise comme critère de sélection la distance entre le site ou secteur générant la cellule candidate et la position du terminal radio.

Selon une autre particularité, les cellules d'arrivée sélectionnées sont regroupées dans une liste de cellules d'arrivée comprenant un classement déterminé en fonction des critères de sélection.

Ainsi, l'invention permet avantageusement d'envoyer au terminal radio une liste restreinte de cellules voisines préalablement sélectionnées selon des critères de pertinence tels que le recouvrement avec les cellules de départ potentielles ou la distance du terminal par rapport à la station de base d'une voisine. De plus, le classement selon les critères de sélection permet de favoriser un handover vers une bande de fréquences prioritaire.

Un autre but de l'invention est d'apporter une solution à un ou plusieurs des problèmes rencontrés dans l'art antérieur en définissant un équipement informatique, spécialement adapté au procédé selon l'invention, pour optimiser le transfert automatique de connexion entre des systèmes 2G et 3G.

Ce but est atteint par un équipement informatique pour la mise en oeuvre du procédé selon l'invention, comportant des moyens de mémorisation, des moyens de calcul et des premiers moyens de sélection, lesdits moyens de mémorisation comportant dans une première mémoire des données représentatives de zones géographiques couvertes par un réseau de radiotéléphonie cellulaire divisées en une pluralité de points ou pixels, dans une seconde mémoire des données représentatives d'un découpage du réseau en une pluralité de cellules radio réparties entre deux systèmes de génération différente, le découpage distinguant les bandes de fréquences utilisées dans chacune des cellules, et dans une troisième mémoire des données de couverture en tout point du réseau, ledit équipement étant caractérisé en ce qu'il comporte :
- des moyens interactifs entre l'utilisateur et ledit équipement pour permettre la saisie de paramètres de calcul, les moyens de mémorisation stockant les paramètres de calcul dans un fichier de configuration,
- des moyens d'extraction et de mise en table, à partir des données de couverture, pour générer des tables de hiérarchie reportant des données de meilleure cellule serveuse et d'au moins de meilleure seconde cellule serveuse pour chaque bande de fréquences au sein de zones de cellules radio du réseau découpé,
- des moyens de collecte d'informations pour déterminer la position dans le réseau et la bande de fréquences "source" de terminaux mobiles radio bimode, les premiers moyens de sélection étant agencés pour utiliser les données de position et de bande de fréquences collectées par les moyens de collecte d'informations pour un terminal radio en vue de sélectionner dans les tables de hiérarchie au moins une cellule de départ associée à ce terminal radio dans un premier système et correspondant à ladite bande de fréquences "source",
- un module de génération à la disposition des moyens de calcul, apte à utiliser les données de découpage et les tables de hiérarchie du réseau pour générer une liste de cellules dites candidates appartenant à un deuxième système et voisines de ladite cellule de départ, les moyens de calcul comprenant des seconds moyens de sélection pour sélectionner dans la liste de candidates au moins une cellule d'arrivée en fonction d'au moins un paramètre de calcul du fichier de configuration.

Selon une autre particularité, le module de génération est agencé pour extraire des tables de hiérarchie une pré-liste de cellules du deuxième système voisines de ladite cellule de départ et calculer la surface de recouvrement avec la cellule de départ de chacune de ces cellules voisines, le module de génération étant en outre apte à utiliser des données géomarketing issues des données de couverture pour pondérer la surface de recouvrement calculée.

Selon une autre particularité, le module de génération dispose d'un module de comparaison des moyens de calcul permettant de discriminer des cellules voisines du deuxième système ayant un pourcentage de recouvrement avec la cellule départ inférieur à un seuil de pourcentage paramétré dans le fichier de configuration.

Selon une autre particularité, les premiers moyens de sélection disposent d'un module de comparaison des moyens de calcul pour permettre la sélection d'une cellule de départ pour une bande de fréquences déterminée uniquement si le niveau de champ correspondant excède un premier seuil prédéterminé paramétré dans le fichier de configuration.

Selon une autre particularité, les seconds moyens de sélection disposent d'un module de comparaison des moyens de calcul pour valider des cellules candidates par comparaison du niveau de champ de chacune de ces candidates à un second seuil prédéterminé paramétré dans le fichier de configuration, les seconds moyens de sélection sélectionnant une cellule d'arrivée uniquement si le niveau de champ d'une des candidates excède ledit second seuil.

Selon une autre particularité, les données de réseau stockées dans les moyens de mémorisation représentent un découpage répartissant les cellules du réseau de radiotéléphonie cellulaire entre un premier système de type GSM avec au moins deux bandes de fréquences différentes et un deuxième système de type W-CDMA avec au moins une bande de fréquences.

Selon une autre particularité, les seconds moyens de sélection sont agencés pour distinguer parmi les cellules candidates un niveau de priorité d'une bande de fréquences, le fichier de configuration prévoyant le stockage de paramètres de calcul représentatifs d'un niveau de priorité pour chacune des bandes de fréquences.

Selon une autre particularité, les premiers moyens de sélection sont aptes à utiliser les données de position et de bande de fréquences collectées par les moyens de collecte d'informations pour présélectionner les meilleure et meilleure seconde cellules serveuses correspondantes et disposent en outre d'un module de comparaison des moyens de calcul pour comparer à un premier seuil maximum de décalage prédéterminé paramétré dans le fichier de configuration la différence de niveau de champ entre ladite meilleure cellule serveuse et ladite meilleure seconde cellule serveuse, les premiers moyens de sélection étant agencés pour ne sélectionner comme cellule de départ que la meilleure cellule serveuse en cas de dépassement de ce premier seuil maximum.

Selon une autre particularité, les seconds moyens de sélection disposent d'un module de comparaison des moyens de calcul pour discriminer parmi les cellules candidates des meilleures secondes cellules serveuses par comparaison de la différence de niveau de champ entre la meilleure cellule serveuse et la meilleure seconde cellule serveuse d'une même bande de fréquences à un second seuil maximum de décalage prédéterminé paramétré dans le fichier de configuration.

Selon une autre particularité, le fichier de configuration comporte un paramètre de limitation à un nombre seuil déterminé de la liste de cellules candidates, le module de génération utilisant ce paramètre de limitation pour fournir une liste ayant le nombre déterminé de cellules candidates.

Selon une autre particularité, le fichier de configuration comporte un paramètre de sélection de cellules co-sites ou co-secteurs par rapport à ladite cellule de départ, le module de génération étant agencé pour insérer dans la liste de cellules candidates des cellules appartenant au deuxième système et issues du même site ou secteur d'émission-réception que la cellule de départ.

Selon une autre particularité, le module de génération est agencé pour tenir compte d'une part d'un niveau de champ minimum paramétré dans le fichier de configuration lors du calcul des surfaces de recouvrement et d'autre part d'un coefficient de pondération paramétré dans le fichier de configuration et représentatif du type de sursol et/ou de la densité de trafic dans la cellule, pour multiplier la surface de recouvrement par le coefficient de pondération.

Selon une autre particularité, le fichier de configuration comporte un paramètre de sélection relatif à la distance entre le site ou secteur générant la cellule candidate et la position du terminal radio.

Selon une autre particularité, les moyens de calcul sont agencés pour classer de manière déterminée les cellules d'arrivée en fonction de paramètres du fichier de configuration.

L'invention, avec ses caractéristiques et avantages, ressortira plus clairement à la lecture de la description faite en référence aux dessins annexés donnés à titre d'exemples non limitatifs dans lesquels :
- la figure 1 représente schématiquement l'équipement informatique selon l'invention et une carte illustrant le recouvrement entre cellules de systèmes de génération différente,
- la figure 2 montre un exemple de situation nécessitant un handover selon l'enseignement de la présente invention,
- la figure 3 représente une table de hiérarchie reportant pour chaque bande de fréquences la meilleure et la seconde meilleure cellule serveuse pour une zone de cellules radio définie du réseau,
- la figure 4 représente un logigramme des étapes du procédé dans un mode de réalisation de l'invention,
- la figure 5 représente une fenêtre permettant la saisie et la sélection de paramètres de calcul.

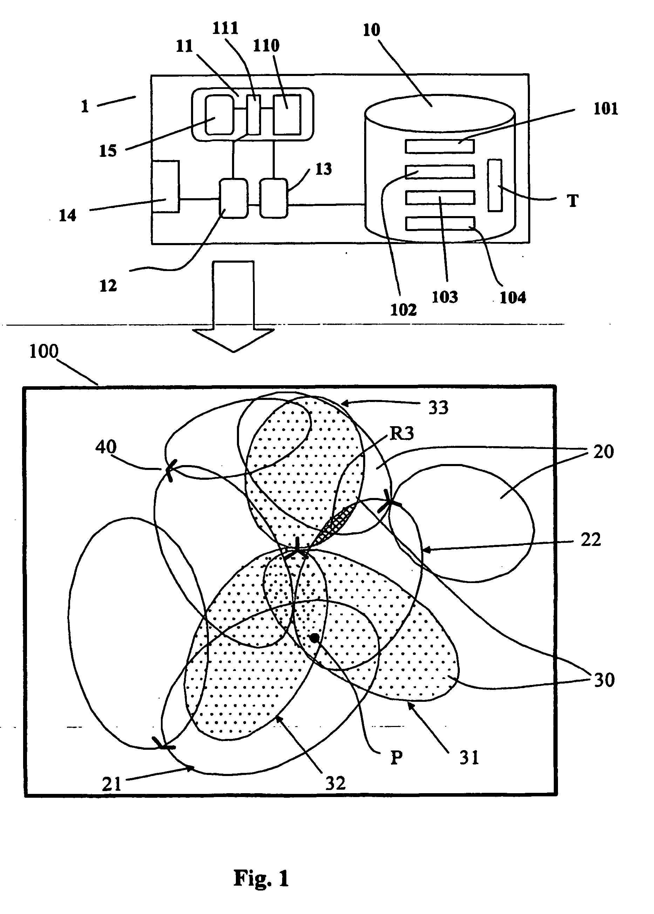

L'invention va à présent être décrite en référence aux figures 1, 2 et 3.

L'équipement informatique (1) selon l'invention est destiné au calcul du voisinage 2G-3G pour permettre le paramétrage d'un transfert automatique de connexion entre des systèmes de génération différente lorsqu'un terminal mobile radio bimode se déplace entre de tels systèmes dans un réseau (4) de radiotéléphonie cellulaire. L'équipement (1) montré sur la figure 1 comporte des moyens de mémorisation (10), des moyens de calcul (11) et des premiers moyens de sélection (12). Les moyens de mémorisation (10) peuvent se composer d'une première mémoire (101) pour stocker des données représentatives de zones géographiques couvertes par un réseau (4) de radiotéléphonie cellulaire et divisées en une pluralité de points ou pixels, d'une seconde mémoire (102) pour stocker des données représentatives d'un découpage du réseau en une pluralité de cellules radio (20, 30), et d'une troisième mémoire (103) pour stocker des données de couverture en tout point du réseau (4).

Le découpage réalisé distingue deux systèmes de génération différente utilisés par chacune des cellules radio (20, 30). Ces cellules sont générées par des moyens d'émission/réception (41) de stations de base (40) du réseau (4). Dans un mode de réalisation préféré de l'invention, le découpage distingue les différentes bandes de fréquences pour chacune des cellules radio (20, 30), plusieurs bandes de fréquences pouvant être prévues pour un système. Ce découpage peut correspondre à une modélisation du réseau (4) répartissant les cellules (20, 30) du réseau (4) de radiotéléphonie cellulaire entre un premier système de seconde génération, par exemple et de manière non limitative de type GSM avec au moins deux bandes de fréquences différentes, et un deuxième système de troisième génération, par exemple de type W-CDMA avec au moins une bande de fréquences.

Comme représenté à la figure 1, des moyens interactifs (100) entre l'utilisateur et ledit équipement (1) sont prévus pour la saisie et l'affichage de paramètres de calcul sélectionnables, ainsi que l'affichage de cartes du réseau, comme par exemple des cartes de couverture du réseau (4) dans une zone géographique par exemple de la taille d'un quartier, d'une ville ou d'un département. Les moyens de traitement ou de calcul (11), ou unité centrale, les moyens de mémorisation (10), ainsi que les moyens de saisie par un clavier avec souris ou un autre dispositif et de présentation de données par un écran d'affichage interactif (100), n'ont pas été représentés en détail. Un fichier de configuration (104) stocké dans les moyens de mémorisation (10) permet par exemple de rassembler les paramètres de calcul. L'équipement selon l'invention est doté de moyens d'extraction (13) et de mise en table pour générer, à partir des données de couverture, des tables de hiérarchie (T) reportant des données de meilleure cellule serveuse (C1) et d'au moins de meilleure seconde cellule serveuse (C2) pour chaque bande de fréquences au sein de zones de cellules radio du réseau découpé (4). Ces tables de hiérarchie (T) sont stockées dans les moyens de mémorisation (10).

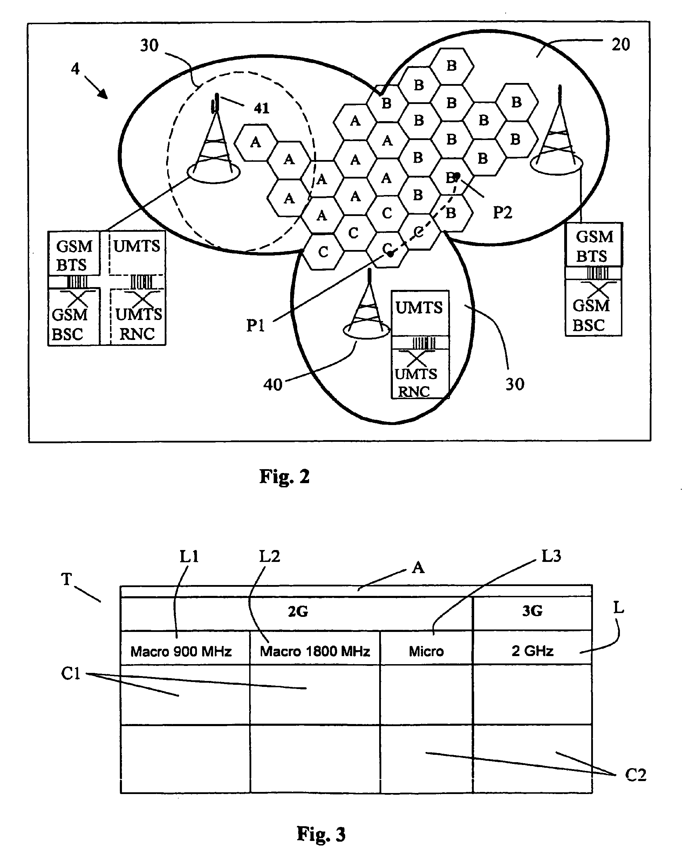

Dans l'exemple de la figure 3, des données représentatives de la meilleure (C1) et de la seconde meilleure (C2) cellules serveuses sont reportées dans la table de hiérarchie correspondant à une zone de cellules radio définie (A) du réseau (4). Dans le mode de réalisation de la figure 3, le réseau (4) se compose d'une part de cellules radio (30) adaptées pour la bande de fréquences ou couche 2 GHz (L) de l'UMTS (Universal Mobile Telecommunication System) et d'autre part de cellules radio (20) définissant respectivement des macro-cellules pour la couche 900MHz (L1), des macro-cellules pour la couche 1800MHz (L2) ou encore des micro-cellules pour une couche supplémentaire (L3) comme dans l'exemple du système de seconde génération GSM. N'importe quel système de troisième génération analogue à l'UMTS peut également être utilisé, comme par exemple le CDMA-2000. Les tables de hiérarchie (T) peuvent se présenter sous la forme d'index correspondant à des zones de cellules radio définies (A) et désignant la cellule serveuse (C1) ayant le meilleur niveau de couverture pour chacune des bandes de fréquences envisageables dans le réseau (4), respectivement la cellule serveuse (C2) ayant le meilleur second niveau de couverture.

Dans un mode de -réalisation de l'invention, pour chaque bande de fréquences, une carte numérique (M1) découpant des zones (A) de meilleures cellules serveuses (C1) peut être créée par des moyens de génération de carte (non représentés) de l'équipement informatique (1), à partir des données de réseau telles que les données de couverture. De façon analogue, une carte numérique (M2) découpant des zones de cellules meilleures secondes serveuses (C2) peut être créée. Il peut même être envisagé de créer une carte avec les cellules troisièmes meilleures serveuses dans des variantes de réalisation. De telles cartes (M1, M2) sont par exemple stockées parmi les données de couverture dans la troisième mémoire (103). Pour ce type de carte (M1, M2), on comprend qu'il n'y pas de recouvrement, chaque cellule meilleure serveuse (C1) ayant sa propre zone de prépondérance distincte de n'importe quelle autre cellule pour une bande de fréquences donnée.

Dans l'exemple de la figure 1, l'équipement informatique (1) comporte des moyens de collecte d'informations (14) pour déterminer la position dans le réseau (4) et la bande de fréquences "source" de terminaux mobiles radio bimode. Les déplacements d'un premier point (P1) vers un deuxième point (P2) dans le réseau (4) peuvent être ainsi suivis. Lorsque le terminal mobile radio voyage d'une cellule d'un système de génération déterminée vers une cellule (20) système d'une autre génération, par exemple de l'UMTS vers le GSM dans l'exemple de la figure 2, une décision de handover inter systèmes doit être prise pour assurer la continuité du service fourni par le réseau (4). Dans un mode de réalisation de l'invention, les premiers moyens de sélection (12) permettent d'utiliser les données de position et de bande de fréquences collectées par les moyens de collecte d'informations (14) relatives à un terminal radio, en vue de sélectionner dans les tables de hiérarchie (T) au moins une cellule de départ (21, 22) associée à ce terminal radio dans un premier système et correspondant à ladite bande de fréquences "source". En référence avec la figure 1, lorsqu'un terminal radio utilisant les cellules (20) du système GSM se trouve dans la position (P) et se dirige vers une zone couverte par des cellules (30) d'un second système du type UMTS, les premiers moyens de sélection (12) vont par exemple identifier grâce aux tables de hiérarchie (T) au moins deux cellules de départ (21, 22) dans ce premier système GSM.

En référence à la figure 3, l'équipement informatique (1) permet de distinguer différentes couches (L, L1, L2, L3) ou bandes de fréquences au sein des systèmes du réseau (4). Dans un mode de réalisation de l'invention, des données de réseau (4) stockées dans les moyens de mémorisation (10) représentent un découpage répartissant les cellules (20, 30) du réseau (4) de radiotéléphonie cellulaire entre un premier système de type GSM avec au moins deux bandes de fréquences différentes (L1, L2, L3) et un deuxième système de type W-CDMA avec au moins une bande de fréquences (L). Ainsi, les tables de hiérarchie (T) comme les cartes numériques (M1, M2) tiennent compte de chacune des couches (L, L1, L2, L3), de façon à tenir compte de cellules meilleures serveuses et de cellules meilleures secondes serveuses pour chacune des bandes de fréquences pouvant être utilisées par un terminal mobile radio bimode.

Ces premiers moyens de sélection (12) peuvent disposer d'un module de comparaison (111) des moyens de calcul (11) pour permettre la sélection d'une cellule de départ (21, 22), pour une bande de fréquences déterminée d'un premier système, uniquement si le niveau de champ correspondant excède un premier seuil prédéterminé (61) paramétré dans le fichier de configuration (104). Une telle cellule de départ (21, 22) sert par la suite de référenee pour déterminer des cellules voisines (31, 32, 33) utilisant une ou plusieurs bandes de fréquences d'un système de génération différente.

En référence à la figure 1, l'équipement informatique (1) est doté en outre d'un module de génération (110) à la disposition des moyens de calcul (11), permettant d'utiliser les données de découpage et les tables de hiérarchie (T) du réseau (4) pour générer une liste de cellules dites candidates (31, 32) appartenant au deuxième système, c'est-à-dire au système UMTS dans le cas de l'exemple de la figure 1. Les cellules candidates (31,32) sont des cellules voisines de ladite cellule de départ (21, 22). On comprend aisément que pour la réalisation d'un handover inter-systèmes, les cellules candidates (31, 32) sont choisies parmi les cellules (30) d'un système différent de celui des cellules de départ (20). Un handover peut aussi bien être réalisé selon l'invention d'un système 3G vers un système 2G et réciproquement.

L'invention va à présent être décrite en référence aux figures 1, 3 et 5.

Les moyens de calcul (11) de l'équipement (1) comprennent des seconds moyens de sélection (15) pour sélectionner dans la liste de candidates (21, 22) au moins une cellule d'arrivée en fonction d'au moins un paramètre de calcul du fichier de configuration (104). En particulier, l'équipement informatique (1) permet de sélectionner, par l'intermédiaire de ces seconds moyens de sélection (15), une cellule d'arrivée ayant un niveau de champ suffisamment élevé pour permettre la réalisation du handover inter-systèmes, une cellule meilleure seconde serveuse (C2) pouvant être choisie en cas de défaillance ou incertitude pour la cellule meilleure serveuse (C1). Pour cela, les seconds moyens de sélection (15) disposent d'un module de comparaison (111) des moyens de calcul (11) pour valider des cellules candidates (31, 32) par comparaison du niveau de champ de chacune de ces candidates (31, 32) à un seuil prédéterminé (62) paramétré dans le fichier de configuration (104), les seconds moyens de sélection (15) sélectionnant une cellule d'arrivée uniquement si le niveau de champ d'une des candidates (31, 32) excède ledit seuil (62).

Pour réduire au maximum le temps de balayage des fréquences à rechercher par le terminal radio bimode lors d'un handover inter-systèmes, l'équipement informatique (1) permet dans un premier temps de réduire le nombre de cellules voisines (31, 32, 33) à un nombre réduit de cellules candidates (31, 32) et dans un deuxième temps de limiter par utilisation de paramètres de calcul le nombre de cellules candidates (31, 32) à un nombre restreint de cellules d'arrivée.

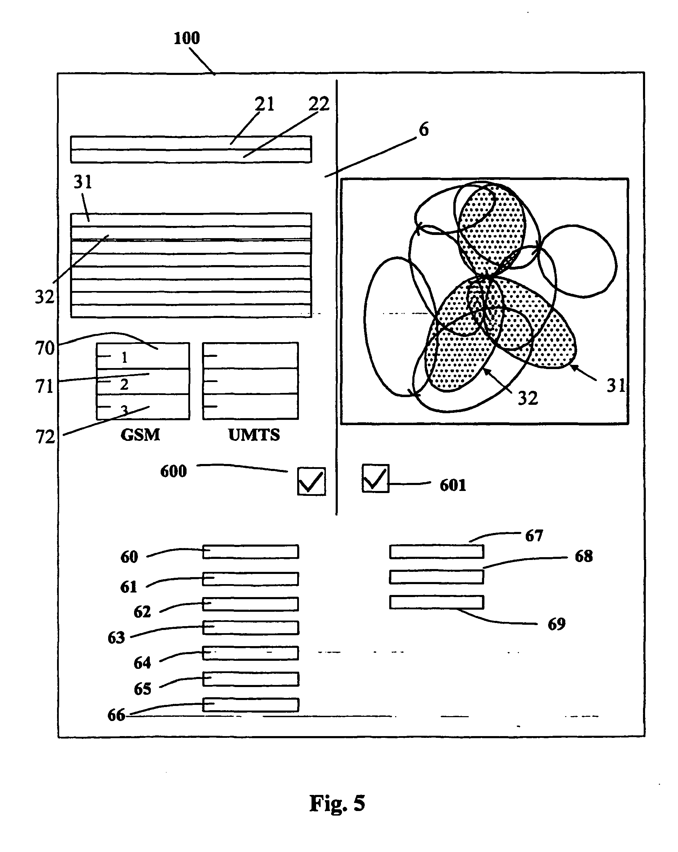

Dans un mode de réalisation de l'invention, le module de génération (110) est agencé pour extraire des tables de hiérarchie (T) une pré-liste de cellules (31, 32, 33) du deuxième système voisines de ladite cellule de départ (21, 22) et calculer la surface de recouvrement avec la cellule de départ (21, 22) de chacune de ces cellules voisines (31, 32, 33). Ce module de génération (110) peut utiliser des données géomarketing issues des données de couverture pour pondérer la surface de recouvrement calculée. La surface de recouvrement calculée peut être par exemple artificiellement augmentée ou réduite par multiplication de cette surface de recouvrement avec un coefficient de pondération. Le module de génération (110) est par exemple agencé pour tenir compte d'une part, lors du calcul des surfaces de recouvrement, d'un niveau de champ minimum (66) paramétré dans le fichier de configuration (104) et d'autre part du coefficient de pondération paramétré dans le fichier de configuration (104) et représentatif du type de sursol et/ou de la densité de trafic dans la cellule. Dans l'exemple de la figure 5, une option de pondération (600) peut être sélectionnée sur une fenêtre (6) de paramétrage affichée par les moyens interactifs (100).

Le module de génération (110) peut disposer d'un module de comparaison (111) des moyens de calcul (11) afin de discriminer parmi les cellules voisines (31, 32, 33) du deuxième système celles qui ont un pourcentage de recouvrement avec la cellule de départ (21, 22) inférieur à un seuil de pourcentage (60) paramétré dans le fichier de configuration (104). Dans l'exemple de la figure 1, une cellule voisine (33) ne recouvre que sur une petite surface (R3) les cellules de départ (21, 22). Le pourcentage de recouvrement de cette cellule voisine (33) par rapport à la cellule de départ (22) étant inférieur audit seuil de pourcentage (60), par exemple paramétré à une valeur de 5%, cette cellule (33) est écartée de la liste de cellules candidates (31, 32). La comparaison peut être aussi bien réalisée entre des vraies surfaces ou entre des surfaces pondérées.

Dans un mode de réalisation de l'invention, la pondération est fonction notamment du sursol, ce qui permet de tenir compte de la distribution réelle de trafic qui varie selon la classe de sursol et éventuellement le type d'axe de circulation. Cette pondération est par exemple obtenue à partir d'un fichier stocké dans les moyens de mémorisation (10) qui se présente sous la forme d'une matrice de pondération, comme représenté ci-dessous.

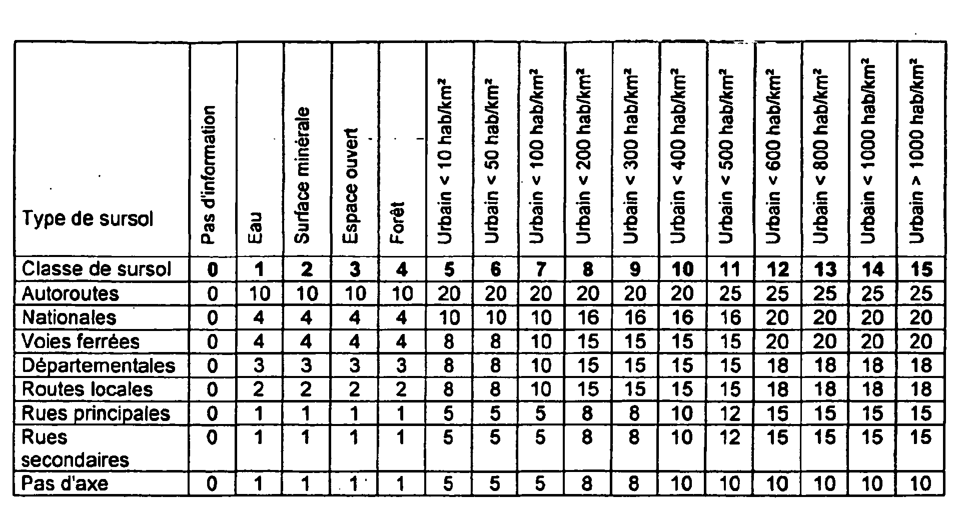

En référence à la figure 5, la fenêtre (6) de paramétrage affichée par les moyens interactifs (100) permet à l'utilisateur d'affiner la sélection des cellules d'arrivée (31, 32). Dans le mode de réalisation préféré de l'invention, les seconds moyens de sélection (15) sont agencés pour distinguer parmi les cellules candidates (31, 32) un niveau de priorité (70, 71, 72) d'une couche ou bande de fréquences. Le fichier de configuration (104) prévoit le stockage de paramètres de calcul représentatifs de ces niveaux de priorité (70, 71, 72) pour chacune des bandes de fréquences, les moyens de calcul (11) peuvent classer de manière déterminée les cellules d'arrivée (31, 32) en fonction de certains paramètres du fichier de configuration (104) et notamment de ces niveaux de priorité (70, 71, 72).

Pour optimiser la sélection d'une cellule de départ (21, 22), il peut être avantageux de ne pas tenir compte de cellules meilleures secondes serveuses (C2) dont le niveau de champ est trop faible par rapport à la meilleure cellule serveuse (C1) correspondante. En effet une telle cellule serveuse (C2) ne sera en pratique quasiment jamais sélectionnée par le terminal radio. La différence de niveau de champ entre ladite meilleure cellule serveuse (C1) et ladite meilleure seconde cellule serveuse (C2) peut donc être utilisée pour discriminer les cellules (C2) trop faibles. Pour cela, les premiers moyens de sélection (12) sont aptes à utiliser les données de position et de bande de fréquences collectées par les moyens de collecte d'informations (14) pour dans un premier temps présélectionner les meilleure et meilleure seconde cellules serveuses (C1, C2) correspondantes et dans un deuxième temps comparer à un premier seuil maximum (63) de décalage prédéterminé paramétré dans le fichier de configuration (104) cette différence de niveau de champ. Le module de comparaison (111) des moyens de calcul (11) est à la disposition des premiers moyens de sélection (12) pour la comparaison. La différence de niveau de champ pour chaque zone (A) du réseau (4) peut être reportée dans les tables de hiérarchie (T). Les premiers moyens de sélection (12) sont agencés pour ne sélectionner comme cellule de départ (21, 22) que la meilleure cellule serveuse (C1) en cas de dépassement de ce premier seuil maximum (63).

De façon analogue, le module de comparaison (111) peut être utilisé par les seconds moyens de sélection (15) pour discriminer parmi les cellules candidates (31, 32) des meilleures secondes cellules serveuses (C2) par comparaison de la différence de niveau de champ entre la meilleure cellule serveuse (C1) et la meilleure seconde cellule serveuse (C2) d'une même bande de fréquences à un second seuil maximum (64) de décalage prédéterminé paramétré dans le fichier de configuration (104). Comme représenté à la figure 5, le fichier de configuration (104) peut comporter un paramètre de limitation pour restreindre la liste de cellules candidates (31, 32) à un nombre seuil (65) déterminé. Le module de génération (110) utilise par exemple ce paramètre de limitation pour fournir une liste ayant le nombre déterminé de cellules candidates (31, 32). Il peut s'avérer en effet peu utile de rechercher un trop grand nombre de cellule candidates (31, 32) pour prendre une décision de handover inter-systèmes.

Par ailleurs, le fichier de configuration (104) peut également comporter un paramètre (601) de sélection de cellules co-sites ou co-secteurs par rapport à la cellule de départ (21, 22). Il est en effet utile de sélectionner en plus des voisines (31, 32, 33) des cellules qui sont générées depuis un même site regroupant des stations de base (40) GSM et UMTS. Des paramètres tels que l'angle (67) co-secteur ou la distance (68) co-site peuvent être pris en compte pour conserver de telles cellules. Ainsi, le module de génération (110) permet d'insérer dans la liste de cellules candidates (31, 32) des cellules appartenant au deuxième système et issues du même site ou secteur d'émission-réception que la cellule de départ (21, 22). Le cas où la station de base (4) permet de générer à la fois des cellules (20) en système GSM et des cellules (30) en système UMTS est illustré dans l'exemple de la figure 2. Le fichier de configuration (104) comporte aussi un paramètre de sélection (69) relatif à la distance entre le site ou secteur générant la cellule candidate (31, 32) et la position (P) du terminal radio. Ce paramètre de sélection (69) peut être pris en compte par les seconds moyens de sélection (15) pour sélectionner une ou plusieurs cellules d'arrivée.

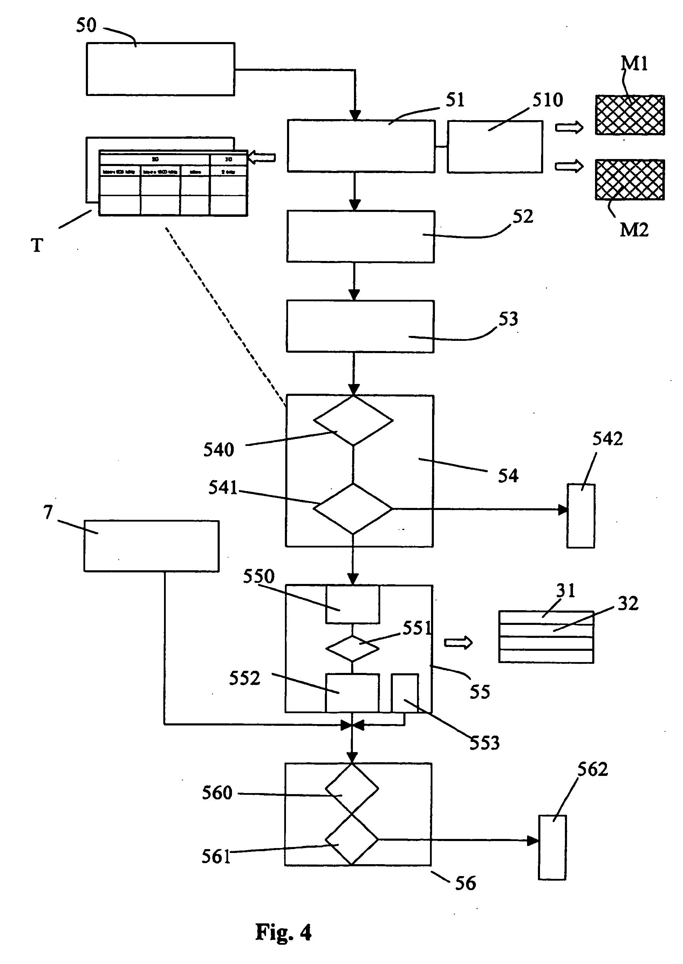

Le déroulement du procédé selon l'invention va à présent être décrit en référence aux figures 4 et 5.

Le procédé selon l'invention, visant à calculer un voisinage 2G-3G pour permettre la paramétrage d'un transfert automatique de connexion entre des systèmes de génération différente, comprend une étape (50) préalable de modélisation incluant le découpage du réseau (4) par bandes de fréquences pour définir une pluralité de cellules radio. Comme illustré à la figure 4, le procédé prévoit une étape (51) de hiérarchisation utilisant des données de couverture de réseau mémorisées par l'équipement informatique (1) pour produire dans des tables de hiérarchie (T), pour chaque bande de fréquences, des données de meilleure cellule serveuse (C1) et d'au moins de meilleure seconde cellule serveuse (C2). L'étape (51) de hiérarchisation comprend, pour chaque bande de fréquences, une étape (510) de création d'une première carte numérique (M1) de cellules meilleures serveuses (C1) et d'une seconde carte numérique (M2) de cellules secondes meilleures serveuses (C2), lesdites première et seconde carte (M1, M2) comprenant un découpage en zones distinctes (A) sans recouvrement. Ainsi le procédé permet d'associer à n'importe quel point du réseau (4) un unique couple cellule meilleure serveuse (C1) et seconde cellule meilleure serveuse (C2) pour une bande de fréquences donnée.

Une étape (52) de configuration est également prévue pour saisir ou sélectionner des paramètres de calcul d'un fichier de configuration (10). Avant de commencer à calculer un voisinage, une étape (53) de détermination de la zone (A) de cellules radio et de la bande de fréquences "source" utilisées dans un premier système par le terminal mobile radio bimode doit d'abord être réalisée. Il s'ensuit une étape (54) de sélection dans les tables de hiérarchie (T) d'au moins une cellule de départ (21, 22) correspondant à cette zone (A) et à la bande de fréquences "source" déterminée. L'étape (54) de sélection d'une cellule de départ commence par une présélection dans les tables de hiérarchie (T) de la meilleure cellule serveuse (C1) et au moins de la meilleure seconde cellule serveuse (C2) correspondant à la bande de fréquences "source" déterminée et à la zone (A) où se situe le terminal. La sélection d'une cellule de départ n'est réalisée qu'à l'issue d'une étape intermédiaire (540) au cours de laquelle le niveau de champ d'une cellule présélectionnée est comparé à un premier seuil prédéterminé (61). La sélection d'une cellule de départ (21, 22) peut échouer si aucune cellule n'a un niveau de champ supérieur à ce premier seuil (61).

De plus, une étape (541) de comparaison à un premier seuil maximum (63) de décalage prédéterminé est réalisée pour la différence de niveau de champ entre la meilleure cellule serveuse (C1) et la meilleure seconde cellule serveuse (C2) présélectionnées. Le dépassement de ce premier seuil maximum (63) déclenche une étape (542) d'élimination de la meilleure seconde cellule serveuse (C2), de façon à sélectionner comme cellule de départ (21, 22) la meilleure cellule serveuse (C1).

Le calcul de voisinage proprement dit débute ensuite avec une étape (55) de génération, à partir des tables de hiérarchie (T), de la liste de cellules candidates (31, 32) appartenant à un deuxième système et voisines de la ou des cellules de départ (21, 22) sélectionnées. Comme représenté à la figure 4, l'étape (55) de génération de la liste de cellules candidates (31, 32) comprend une étape (550) de calcul, pour chacune des cellules voisines (31, 32, 33) du deuxième système, de la surface de recouvrement avec la cellule de départ (21, 22). Ladite étape (55) de génération comporte également une étape (552) de pondération de la surface de recouvrement en fonction de données géomarketing associées à la cellule voisine (31, 32, 33) considérée. Les données géomarketing prévoient l'influence du type de sursol et/ou de la densité de trafic dans la cellule.

Dans un mode de réalisation de l'invention, l'étape (55) de génération de la liste de cellules candidates (31, 32) comprend en outre une étape (551) de discrimination des cellules voisines (31, 32, 33) du deuxième système ayant un pourcentage de recouvrement avec la cellule de départ (21, 22) inférieur au seuil (60) de pourcentage paramétré lors de l'étape (52) de configuration. Cette étape peut être réalisée après l'étape (550) de calcul de surfaces de recouvrement ou dans une variante après l'étape (552) de pondération, le seuil de pourcentage (60) étant comparé au pourcentage de recouvrement de la surface pondérée avec la cellule de départ (21, 22). Dans une variante de réalisation, l'étape (55) de génération de la liste de cellules candidates (31,32) comprend aussi une étape (553) de détection de cellules appartenant au deuxième système et issues du même site ou secteur d'émission-réception que la cellule de départ (21, 22).

Dans l'exemple de la figure 4, lorsque ledit deuxième système prévoit des bandes de fréquences différentes, une étape (7) de définition de priorité permet de prendre en compte de niveaux de priorité (70, 71, 72) entre bandes de fréquences. Un niveau de priorité respectif (70, 71, 72) est associé à chacune des bandes de fréquences de ce deuxième système pour servir de critère de sélection lors d'une étape (56) de sélection dans la liste de cellules candidates (31, 32) d'au moins une cellule d'arrivée. Un ou plusieurs critères de sélection sont pris en compte lors de la sélection de cellules d'arrivée. Les niveaux de priorité (70, 71, 72) peuvent être saisis en paramètres lors de l'étape de configuration (52), l'étape (7) de définition de priorité pouvant correspondre à un critère de sélection déclenchant la prise en compte de ces niveaux de priorité (70, 71, 72) pour par exemple classer les cellules d'arrivée dans un ordre déterminé ou sélectionner une cellule d'arrivée associée à une bande de fréquences prioritaire.

Dans le mode de réalisation de la figure 4, l'étape (56) de sélection de cellules d'arrivée comprend une étape (560) de validation des cellules candidates (31, 32) par comparaison du niveau de champ de chacune de ces candidates à un second seuil prédéterminé (62) pour parvenir à la sélection d'une cellule d'arrivée uniquement si le niveau de champ d'une des candidates excède ledit second seuil (62). L'étape (56) de sélection de cellules d'arrivée peut également comporter une seconde étape (561) de comparaison relative à au moins une bande de fréquences dudit deuxième système pour comparer à un second seuil maximum (64) de décalage prédéterminé la différence de niveau de champ entre la meilleure cellule serveuse (C1) et la meilleure seconde cellule serveuse (C2) extraites de la liste de cellules candidates (31, 32). Le dépassement de ce second seuil maximum (64) correspond à un critère de non-sélection déclenchant une étape (562) d'élimination de cette meilleure seconde cellule (C2).

Un des avantages de l'invention est de fournir une solution optimisée aux problèmes de trous de couverture dans les systèmes de troisième génération. L'invention donne la possibilité de réaliser sans coupure un transfert d'une partie 3G à une partie 2G d'un réseau, en tenant compte des différentes couches existantes (3 couches dans le cas du système GSM).

L'invention fournit un outil d'aide au paramétrage pour le handover inter-systèmes, prenant en compte des pondérations pertinentes sur la qualité des cellules radio. L'invention vise ainsi à satisfaire des besoins en couverture d'un réseau en cours de déploiement du système de troisième génération.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de calcul du voisinage 2G-3G pour permettre le paramétrage d'un transfert automatique de connexion entre des systèmes de génération différente lorsqu'un terminal mobile radio bimode se déplace entre de tels systèmes, mis en oeuvre dans un réseau de radiotéléphonie cellulaire par un équipement informatique (1), comprenant une étape (50) préalable de modélisation comportant le découpage du réseau (4) en une pluralité de cellules radio générées par des moyens d'émission/réception (41) de stations de base (40) du réseau (4), le découpage distinguant les bandes de fréquences utilisées dans chacune des cellules, l'équipement informatique (1) mémorisant dans des moyens de mémorisation (10) des données de couverture en tout point du réseau, **caractérisé en ce qu'**il comporte une étape (51) dite de hiérarchisation utilisant les données de couverture pour produire dans des tables de hiérarchie (T), pour chaque bande de fréquences au sein du réseau (4) découpé, des données de meilleure cellule serveuse (C1) et d'au moins de meilleure seconde cellule serveuse (C2) respectivement représentatives d'un index répertoriant des zones (A) de cellules radio correspondant au meilleur niveau de couverture, respectivement au meilleur second niveau de couverture, le procédé comprenant en outre :
- une étape (52) de configuration comprenant le stockage dans un fichier de configuration (104) de paramètres de calcul,
- une étape (53) de détermination de la zone (A) de cellules radio et de la bande de fréquences "source" utilisées dans un premier système par le terminal mobile radio bimode, suivie d'une étape (54) de sélection dans les tables de hiérarchie (T) d'au moins une cellule de départ correspondant à cette zone (A) et à la bande de fréquences "source" déterminée,
- une étape (55) de génération à partir des tables de hiérarchie d'une liste de cellules dites candidates appartenant à un deuxième système et voisines de ladite cellule de départ (21, 22),
- une étape (56) de sélection dans la liste de candidates d'au moins une cellule d'arrivée en fonction d'au moins un critère de sélection.

2. Procédé selon la revendication 1, dans lequel l'étape (55) de génération de la liste de cellules candidates (31, 32) comprend une étape (550) de calcul, pour chacune des cellules voisines (31, 32, 33) du deuxième système, de la surface de recouvrement avec la cellule de départ (21, 22) et une étape (552) de pondération de la surface de recouvrement en fonction de données géomarketing associées à la cellule voisine (31, 32, 33) considérée.

3. Procédé selon la revendication 1 ou 2, dans lequel l'étape (55) de génération de la liste de cellules candidates (31, 32) comprend une étape (551) de discrimination des cellules voisines (31, 32, 33) du deuxième système ayant un pourcentage de recouvrement avec la cellule de départ (21, 22) inférieur à un seuil (60) de pourcentage paramétré lors de l'étape (52) de configuration.

4. Procédé selon l'une des revendications 1 à 3, dans lequel l'étape (51) de hiérarchisation comprend, pour chaque bande de fréquences, une étape (510) de création d'une première carte numérique (M1) de cellules meilleures serveuses (C1) et d'une seconde carte numérique (M2) de cellules secondes meilleures serveuses (C2), lesdites première et seconde cartes (M1, M2) comprenant un découpage en zones distinctes (A) sans recouvrement, de façon à associer à n'importe quel point du réseau (4) un unique couple cellule meilleure serveuse (C1) et seconde cellule meilleure serveuse (C2) par bande de fréquences.

5. Procédé selon l'une des revendications 1 à 4, dans lequel l'étape (54) de sélection d'une cellule de départ commence par une présélection dans les tables de hiérarchie (T) de la meilleure cellule serveuse (C1) et au moins de la meilleure seconde cellule serveuse (C2) correspondant à la bande de fréquences "source" déterminée et à la zone (A) où se situe le terminal, puis aboutit à la sélection d'une cellule de départ (21, 22) uniquement si le niveau de champ d'une cellule présélectionnée excède un premier seuil prédéterminé (61).

6. Procédé selon l'une des revendications 1 à 5, dans lequel l'étape (56) de sélection de cellules d'arrivée comprend une étape (560) de validation des cellules candidates (31, 32) par comparaison du niveau de champ de chacune de ces candidates à un second seuil prédéterminé (62) pour parvenir à la sélection d'une cellule d'arrivée uniquement si le niveau de champ d'une des candidates (31, 32) excède ledit second seuil (62).

7. Procédé selon l'une des revendications 1 à 6, dans lequel l'étape (50) de modélisation comporte un découpage répartissant les cellules du réseau de radiotélépnone cellulaire entre un premier système de type GSM avec au moins deux bandes de fréquences différentes et un deuxième système de type W-CDMA avec au moins une bande de fréquences.

8. Procédé selon l'une des revendications 1 à 7, **caractérisé en ce que**, lorsque ledit deuxième système prévoit des bandes de fréquences différentes, un niveau de priorité (70, 71, 72) défini lors d'une étape (550) de définition de priorité est associé à chacune des bandes de fréquences de ce deuxième système pour servir de critère de sélection lors de ladite étape (56) de sélection dans la liste de cellules candidates (31, 32).

9. Procédé selon l'une des revendications 5 à 8, **caractérisé en ce qu'**il comporte une première étape (541) de comparaison pour comparer à un premier seuil maximum (63) de décalage prédéterminé la différence de niveau de champ entre la meilleure cellule serveuse (C1) et la meilleure seconde cellule serveuse (C2) présélectionnées lors de l'étape (54) de sélection dans les tables de hiérarchie, le dépassement de ce premier seuil maximum (63) déclenchant une étape (542) d'élimination de la meilleure seconde cellule serveuse (C2), de façon à sélectionner comme cellule de départ (21, 22) la meilleure cellule serveuse (C1).

10. Procédé selon l'une des revendications 1 à 9, **caractérisé en ce qu'**il comporte une seconde étape (561) de comparaison concernant au moins une bande de fréquences dudit deuxième système pour comparer à un second seuil maximum (64) de décalage prédéterminé la différence de niveau de champ entre la meilleure cellule serveuse (C1) et la meilleure seconde cellule serveuse (C2) extraites de la liste de cellules candidates (31, 32), le dépassement de ce second seuil maximum (64) correspondant à un critère de non-sélection déclenchant une étape (562) d'élimination de cette meilleure seconde cellule (C2) lors de l'étape (56) de sélection de cellules d'arrivée.

11. Procédé selon l'une des revendications 3 à 10, dans lequel l'étape (55) de génération de la liste de cellules candidates (31, 32) se limite à un nombre seuil (65) de cellules candidates (31, 32) déterminé paramétré lors d'une deuxième étape (502) de paramétrage.

12. Procédé selon l'une des revendications 1 à 11, dans lequel l'étape (55) de génération de la liste de cellules candidates (31,32) comprend une étape (553) de détection de cellules appartenant au deuxième système et issues du même site ou secteur d'émission-réception que la cellule de départ (21, 22).

13. Procédé selon l'une des revendications 2 à 12, dans lequel l'étape (550) de calcul tient compte d'un niveau de champ minimum (66) pour définir la surface de recouvrement de chacune des cellules voisines (31, 32, 33), l'étape (552) de pondération de la surface de recouvrement prenant en compte un coefficient de pondération représentatif du type de sursol et/ou de la densité de trafic dans la cellule.

14. Procédé selon l'une des revendications 1 à 13, dans lequel l'étape (56) de sélection dans la liste de candidates (31, 32) utilise comme critère de sélection la distance entre le site ou secteur générant la cellule candidate et la position du terminal radio.

15. Procédé selon une des revendications 1 à 14, dans lequel les cellules d'arrivée sélectionnées sont regroupées dans une liste de cellules d'arrivée comprenant un classement déterminé en fonction des critères de sélection.

16. Equipement informatique (1) pour la mise en oeuvre du procédé selon l'une quelconque des revendications 1 à 15, comportant des moyens de mémorisation (10), des moyens de calcul (11) et des premiers moyens de sélection (12), lesdits moyens de mémorisation (10) comportant dans une première mémoire (101) des données représentatives de zones géographiques couvertes par un réseau (4) de radiotéléphonie cellulaire divisées en une pluralité de points ou pixels, dans une seconde mémoire (102) des données représentatives d'un découpage du réseau (4) en une pluralité de cellules radio (20, 30) réparties entre deux systèmes de génération différente, le découpage distinguant les bandes de fréquences utilisées dans chacune des cellules (20, 30), et dans une troisième mémoire (103) des données de couverture en tout point du réseau (4), ledit équipement (1) étant **caractérisé en ce qu'**il comporte :
- des moyens interactifs (100) entre l'utilisateur et ledit équipement (1) pour permettre la saisie de paramètres de calcul, les moyens de mémorisation (10) stockant les paramètres de calcul dans un fichier de configuration (104),
- des moyens d'extraction (13) et de mise en table, à partir des données de couverture, pour générer des tables de hiérarchie (T) reportant des données de meilleure cellule serveuse et d'au moins de meilleure seconde cellule serveuse pour chaque bande de fréquences au sein de zones de cellules radio du réseau (4) découpé,
- des moyens de collecte d'informations (14) pour déterminer la position dans le réseau et la bande de fréquences "source" de terminaux mobiles radio bimode, les premiers moyens de sélection (12) étant agencés pour utiliser les données de position et de bande de fréquences collectées par les moyens de collecte d'informations (14) pour un terminal radio en vue de sélectionner dans les tables de hiérarchie (T) au moins une cellule de départ (21, 22) associée à ce terminal radio dans un premier système et correspondant à ladite bande de fréquences "source",
- un module de génération (110) à la disposition des moyens de calcul (11), apte à utiliser les données de découpage et les tables de hiérarchie (T) du réseau pour générer une liste de cellules dites candidates (31, 32) appartenant à un deuxième système et voisines de ladite cellule de départ (21, 22), les moyens de calcul (11) comprenant des seconds moyens de sélection (15) pour sélectionner dans la liste de candidates (31, 32) au moins une cellule d'arrivée en fonction d'au moins un paramètre de calcul du fichier de configuration.

17. Equipement selon la revendication 16, dans lequel le module de génération (110) est agencé pour extraire des tables de hiérarchie (T) une pré-liste de cellules (31, 32, 33) du deuxième système voisines de ladite cellule de départ et calculer la surface de recouvrement avec la cellule de départ de chacune de ces cellules voisines, le module de génération (110) étant en outre apte à utiliser des données géomarketing issues des données de couverture pour pondérer la surface de recouvrement calculée.

18. Equipement selon la revendication 16 ou 17, dans lequel le module de génération (110) dispose d'un module de comparaison (111) des moyens de calcul (11) permettant de discriminer des cellules voisines du deuxième système ayant un pourcentage de recouvrement avec la cellule de départ inférieur à un seuil de pourcentage (60) paramétré dans le fichier de configuration (104).

19. Equipement selon l'une des revendications 16 à 18, dans lequel les premiers moyens de sélection (12) disposent d'un module de comparaison (111) des moyens de calcul (11) pour permettre la sélection d'une cellule de départ (21, 22) pour une bande de fréquences déterminée uniquement si le niveau de champ correspondant excède un premier seuil prédéterminé (61) paramétré dans le fichier de configuration (104).

20. Equipement selon l'une des revendications 16 à 19, dans lequel les seconds moyens de sélection (15) disposent d'un module de comparaison (111) des moyens de calcul (11) pour valider des cellules candidates par comparaison du niveau de champ de chacune de ces candidates à un second seuil prédéterminé (62) paramétré dans le fichier de configuration (104), les seconds moyens de sélection (15) sélectionnant une cellule d'arrivée uniquement si le niveau de champ d'une des candidates excède ledit second seuil (62).

21. Equipement selon l'une des revendications 16 à 20, dans lequel les données de réseau (4) stockées dans les moyens de mémorisation (10) représentent un découpage répartissant les cellules de réseau (4) de radiotéléphonie cellulaire entre un premier système de type GSM avec au moins deux bandes de fréquences différentes et un deuxième système de type W-CDMA avec au moins une bande de fréquences.

22. Equipement selon l'une des revendications 16 à 21, dans lequel les seconds moyens de sélection (15) sont agencés pour distinguer parmi les cellules candidates un niveau de priorité d'une bande de fréquences, le fichier de configuration (104) prévoyant le stockage de paramètres de calcul représentatifs d'un niveau de priorité (70, 71, 72) pour chacune des bandes de fréquences.

23. Equipement selon l'une des revendications 16 à 22, dans lequel les premiers moyens de sélection (12) sont aptes à utiliser les données de position et de bande de fréquences collectées par les moyens de collecte d'informations (14) pour présélectionner les meilleure et meilleure seconde cellules serveuses correspondantes et disposent en outre d'un module de comparaison (111) des moyens de calcul (11) pour comparer à un premier seuil maximum (63) de décalage prédéterminé paramétré dans le fichier de configuration (104) la différence de niveau de champ entre ladite meilleure cellule serveuse (C1) et ladite meilleure seconde ceiiuie serveuse (C2), ies premiers moyens de sélection (12) étant agencés pour ne sélectionner comme cellule de départ (21, 22) que la meilleure cellule serveuse (C1) en cas de dépassement de ce premier seuil maximum (63).

24. Equipement selon l'une des revendications 16 à 23, dans lequel les seconds moyens de sélection (15) disposent d'un module de comparaison (111) des moyens de calcul (11) pour discriminer parmi les cellules candidates des meilleures secondes cellules serveuses (C2) par comparaison de la différence de niveau de champ entre la meilleure cellule serveuse (C1) et la meilleure seconde cellule serveuse (C2) d'une même bande de fréquences à un second seuil maximum (64) de décalage prédéterminé paramétré dans le fichier de configuration (104).

25. Equipement selon l'une des revendications 16 à 24, dans lequel le fichier de configuration (104) comporte un paramètre de limitation à un nombre seuil (65) déterminé de la liste de cellules candidates (31, 32), le module de génération (110) utilisant ce paramètre de limitation pour fournir une liste ayant le nombre déterminé de cellules candidates.

26. Equipement selon l'une des revendications 16 à 25, dans lequel le fichier de configuration (104) comporte un paramètre de sélection de cellules co-sites ou co-secteurs par rapport à ladite cellule de départ, le module de génération (110) étant agencé pour insérer dans la liste de cellules candidates des cellules appartenant au deuxième système et issues du même site ou secteur d'émission-réception que la cellule de départ.

27. Equipement selon l'une des revendications 16 à 26, dans lequel le module de génération (110) est agencé pour tenir compte d'une part d'un niveau de champ minimum paramétré dans le fichier de configuration (104) lors du calcul des surfaces de recouvrement et d'autre part d'un coefficient de pondération paramétré dans le fichier de configuration (104) et représentatif du type de sursol et/ou de la densité de trafic dans la cellule, pour multiplier la surface de recouvrement par le coefficient de pondération.

28. Equipement selon l'une des revendications 16 à 27, dans lequel le fichier de configuration (104) comporte un paramètre de sélection relatif à la distance entre le site ou secteur générant la cellule candidate et la position du terminal radio.

29. Equipement selon l'une des revendications 16 à 28, dans lequel les moyens de calcul (11) sont agencés pour classer de manière déterminée les cellules d'arrivée en fonction de paramètres du fichier de configuration.

## Claims

1. A method for calculating the 2G-3G vicinity in order to allow parameterization of an automatic connection transfer between systems of different generation when a bimodal radio mobile terminal moves between such systems, implemented in a cellular radiotelephone network by computer equipment (1), comprising a prior modeling step (50) including the partitioning of the network (4) into a plurality of radio cells generated by transceiver means (41) of base stations (40) of the network (4), the partitioning discriminating the frequency bands used in each of the cells, the computer equipment (1) storing in memory storage means (10) coverage data in every point of the network, **characterized in that** it includes a so-called hierarchization step (51) using the coverage data for producing in hierarchy tables (T), for each frequency band within the partitioned network (4), best server cell (C1) data and data of at least best second server cell (C2) respectively representative of an index listing the areas (A) of radio cells corresponding to the best coverage level, respectively to the best second coverage level, the method further comprising:
- a configuration step (52) comprising the storage of calculation parameters in a configuration file (104),
- a step (53) for determining the area (A) of radio cells and of the "source" frequency band used in a first system by the bimodal radio mobile terminal, followed by a step (54) for selecting in the hierarchy tables (T) at least one starting cell corresponding to this area (A) and to the determined "source" frequency band,
- a step (55) for generating from the hierarchy tables a list of so-called candidate cells belonging to a second system and neighboring said starting cell (21, 22),
- a step (56) for selecting from the list of candidates at least one arrival cell depending on at least one selection criterion.

2. The method according to claim 1, wherein the step (55) for generating the list of candidate cells (31, 32) comprises a step (550) for each of the neighboring cells (31, 32, 33) of the second system, for calculating the overlapping surface with the starting cell (21, 22) and a step (552) for weighting the overlapping surface depending on geomarketing data associated with the relevant neighboring cell (31, 32, 33).

3. The method according to claim 1 or 2, wherein the step (55) for generating the list of candidate cells (31, 32) comprises a step (551) for discriminating neighboring cells (31, 32, 33) of the second system having an overlapping percentage with the starting cell (21, 22) of less than a parameterized percentage threshold (60) during the configuration step (52).

4. The method according to any one of claims 1 to 3, wherein the hierarchization step (51) comprises for each frequency band, a step (510) for creating a first digital map (M1) of best server cells (C1) and a second digital map (M2) of second best server cells (C2), said first and second maps (M1, M2) comprising a partitioning into distinct areas (A) without overlapping, in order to associate with any point of the network (4) a single best server cell (C1) and second best server cell (C2) pair per frequency band.

5. The method according to any one of claims 1 to 4, wherein the step (54) for selecting a starting cell begins by pre-selecting in the hierarchy tables (T) the best server cell (C1) and at least the second best server cell (C2) corresponding to the determined "source" frequency band and to the area (A) where the terminal is located, and then results in the selection of a starting cell (21, 22) only if the field level of a pre-selected cell exceeds a first pre-determined threshold (61).

6. The method according to any one of claims 1 to 5, wherein the step (56) for selecting arrival cells comprises a step (560) for validating the candidate cells (31, 32) by comparing the field level of each of these candidates with a second predetermined threshold (62) in order to achieve the selection of an arrival cell only if the field level of one of the candidates (31, 32) exceeds said second threshold (62).

7. The method according to any one of claims 1 to 6, wherein the modeling step (50) includes a partitioning distributing the cells of the cellular radiotelephone network among a first system of the GSM type with at least two different frequency bands and a second system of the W-CDMA type with at least one frequency band.

8. The method according to any one of claims 1 to 7, **characterized in that**, when said second system provides different bands of frequencies, a priority level (70, 71, 72) defined during a priority definition step (550) is associated with each of the frequency bands of this second system in order to be used as a selection criterion during said step (56) for selecting candidate cells (31, 32) in the list.

9. The method according to any one of claims 5 to 8, **characterized in that** it include a first comparison step (541) for comparing with a first maximum threshold (63) of predetermined shift, the field level difference between the best server cell (C1) and the second best server cell (C2) pre-selected during the step (54) for selection in the hierarchy tables, the overshooting of this first maximum threshold (63) triggering a step (542) for eliminating the best second server cell (C2), in order to select the best server cell (C1) as starting cell (21, 22).

10. The method according to any one of claims 1 to 9, **characterized in that** it includes a second comparison step (561) concerning at least one frequency band of said second system in order to compare with a second maximum threshold (64) of predetermined shift, the field level difference between the first best server cell (C1) and the second best server cell (C2) extracted from the list of candidate cells (31, 32), the overshooting of this second maximum threshold (64) corresponding to a non-selection criterion triggering a step (562) for eliminating this second best cell (C2) during the step (56) for selecting arrival cells.

11. The method according to any one of claims 3 to 10, wherein the step (55) for generating the list of candidate cells (31, 32) is limited to a determined threshold number (65) of candidate cells (31, 32) parameterized during a second parameterization step (502).

12. The method according to any one of claims 1 to 11, wherein the step (55) for generating the list of candidate cells (31, 32) comprises a step (553) for detecting cells belonging to the second system and stemming from the same transmission/reception sector or site as the starting cell (21, 22).

13. The method according to any one of claims 2 to 12, wherein the calculation step (550) takes into account a minimum field level (66) for defining the overlapping surface of each of the neighboring cells (31, 32, 33), the step (552) for weighting the overlapping surface taking into account a weighting coefficient representative of the overground type and/or of the traffic density in the cell.

14. The method according to any one of claims 1 to 13, wherein the step (56) for selection in the list of candidates (31, 32) uses as a selection criterion, the distance between the site or sector generating the candidate cell and the position of the radio terminal.

15. The method according to one of claims 1 to 14, wherein the selected arrival cells are grouped in a list of arrival cells comprising a classification determined according to selection criteria.

16. Computer equipment (1) for implementing the method according to any one of claims 1 to 15, including memory storage means (10), calculation means (11) and first selection means (12), said memory storage means (10) including in a first memory (101) data representative of geographical areas covered by a cell radiotelephone network (4) divided into a plurality of points or pixels, in a second memory (102) data representative of a partitioning of the network (4) into a plurality of radio cells (20, 30) distributed between two systems of different generation, the partitioning distinguishing the frequency bands used in each of the cells (20, 30), and in a third memory (103) coverage data in any point of the network (4), said equipment (1) being **characterized in that** it includes:
- interactive means (100) between the user and said equipment (1) in order to allow calculation parameters to be entered, the memory storage means (10) storing the calculation parameters in a configuration file (104),
- coverage data extraction (13) and tabulation means for generating hierarchy tables (T) transferring best server cell data and at least best second server cell data for each band of frequencies within areas of radio cells of the partitioned network (4),
- means for collecting information (14) in order to determine the position in the network and the "source" frequency band of bimodal radio mobile terminals, the first selection means (12) being laid out in order to use the position and frequency band data collected by the means for collecting information (14) for a radio terminal in order to select in the hierarchy tables (T) at least one starting cell (21, 22) associated with this radio terminal in a first system and corresponding to said "source" frequency band,
- a generation module (110) at the disposal of the calculation means (11), capable of using the partitioned data and the hierarchy tables (T) of the network for generating a list of so-called candidate cells (31, 32) belonging to a second system and neighboring said starting cell (21, 22), the calculation means (11) comprising second selection means (15) for selecting in the list of candidates (31, 32) at least one arrival cell depending on at least one calculation parameter of the configuration file.

17. The equipment according to claim 16, wherein the generation module (110) is laid out in order to extract from the hierarchy tables (T) a pre-list of cells (31, 32, 33) of the second system neighboring said starting cell and to calculate the overlapping surface with the starting cell of each of these neighboring cells, the generation module (110) being further capable of using geomarketing data stemming from the coverage data for weighting the calculated overlapping surface.

18. The equipment according to claim 16 or 17, wherein the generation module (110) has a comparison module (111) of the calculation means (11) allowing discrimination of the neighboring cells of the second system having an overlapping percentage with the starting cell of less than a percentage threshold (60) parameterized in the configuration file (104).

19. The equipment according to any one of claims 16 to 18, wherein the first selection means (12) have a comparison module (111) of the calculation means (11) for allowing selection of a starting cell (21, 22) for a determined frequency band only if the corresponding field level exceeds a first predetermined threshold (61) parameterized in the configuration file (104).

20. The equipment according to any one of claims 16 to 19, wherein the second selection means (15) have a comparison module (111) of the calculation means (11) for validating candidate cells by comparing the field level of each of these candidates with a second predetermined threshold (62) parameterized in the configuration file (104), the second selection means (15) selecting an arrival cell only if the field level of one of the candidates exceeds said second threshold (62).

21. The equipment according to any one of claims 16 to 20, wherein the network data (4) stored in the memory storage means (10) represent a partitioning distributing the cells of the cellular radiotelephone network (4) among a first system of the GSM type with at least two different frequency bands and a second system of the WO-CDMA type with at least one frequency band.

22. The equipment according to any of claims 16 to 21, wherein the second selection means (15) are laid out in order to distinguish from among the candidate cells a priority level of a frequency band, the configuration file (104) providing the storage of calculation parameters representative of a priority level (70, 71, 72) for each of the frequency bands.

23. The equipment according to any one of claims 16 to 22, wherein the first selection means (12) are capable of using the position and frequency band data collected by the information collecting means (14) for pre-selecting the corresponding best and second best server cells and further have a comparison module (111) of the calculation means (11) for comparing with a first maximum threshold (63) of predetermined shift parameterized in the configuration file (104) the field level difference between said best server cell (C1) and said second best server cell (C2), the first selection means (12) being laid out so as to only select as starting cell (21, 22) the best server cell (C1) in the case when this first maximum threshold (63) is exceeded.

24. The equipment according to any one of claims 16 to 23, wherein the second selection means (15) have a comparison module (111) of the calculation means (11) for discriminating from among the candidate cells, second best server cells, (C2) by comparing the field level difference between the best server cell (C1) and the second best server cell (C2) of a same frequency band with a second maximum threshold (64) of predetermined shift parameterized in the configuration file (104).

25. The equipment according to any of claims 16 to 24, wherein the configuration file (104) include a parameter for limiting the list of candidate cells (31, 32) to a determined threshold number (65), the generation module (110) using this limitation parameter for providing a list having the determined number of candidate cells.

26. The equipment according to any one of claims 16 to 25, wherein the configuration file (104) includes a parameter for selecting co-site or co-sector cells relatively to said starting cell, the generation module (110) being laid out in order to insert into the list of candidate cells, cells belonging to the second system and stemming from the same transmission/reception site or sector as the starting cell.

27. The equipment according to any one of claims 16 to 26, wherein the generation module (110) is laid out in order to take into account a minimum field level parameterized in the configuration file (104) during the calculation of the overlapping surfaces on the one hand and a weighting coefficient parameterized in the configuration file (104) and representative of the overground type and/or of the traffic density in the cell on the other hand, for multiplying the overlapping surface by the weighting coefficient.

28. The equipment according to any one of claims 16 to 27, wherein the configuration file (104) includes a selection parameter relating to the distance between the site or sector generating the candidate cell and the position of the radio terminal.

29. The equipment according to any one of claims 16 to 28, wherein the calculation means (11) are laid out so as to classify in a determined way the arrival cells depending on parameters of the configuration file.

## Patentansprüche

1. Verfahren zur Berechnung der 2G-3G-Umgebung, um die Parametrierung eines automatischen Verbindungstransfers zwischen Systemen verschiedener Generationen zu ermöglichen, wenn ein bimodale mobiles Funkendgerät sich zwischen derartigen Systemen bewegt, wobei das Verfahren in einem zellularen Funktelefonnetz durch eine EDV-Anlage (1) eingesetzt wird, umfassend einen vorbereitenden Modellierungsschritt (50), der die Aufteilung des Netzes (4) in eine Vielzahl von Funkzellen, die von Sende-/Empfangs-Mittein (41) der Basisstationen (40) des Netzes (4) erzeugt werden, umfasst, wobei die Aufteilung die Frequenzbänder unterscheidet, die in jeder der Zellen verwendet werden, wobei die EDV-Anlage (1) in Speichermitteln (10) Abdeckungsdaten an jedem Punkt des Netzes speichert, **dadurch gekennzeichnet, dass** es einen so genannten Hierarchisierungsschritt (51) umfasst, der die Abdeckungsdaten verwendet, um in Hierarchietabellen (T) für jedes Frequenzband innerhalb des aufgeteilten Netzes (4) Daten der besten Dienstzelle (C1) und mindestens der zweitbesten Dienstzelle (C2) zu erzeugen, die jeweils für einen Index repräsentativ sind, der Funkzellenbereiche (A) aufführt, die dem besten Abdeckungsniveau bzw. dem zweitbesten Abdeckungsniveau entsprechen, wobei das Verfahren ferner Folgendes umfasst:
- einen Konfigurationsschritt (52), der das Speichern von Berechnungsparametern in einer Konfigurationsdatei (104) umfasst,
- einen Schritt (53) zum Bestimmen des Funkzellenbereichs (A) und des "Ursprungs"-Frequenzbandes, die in einem ersten System von dem bimodalen mobilen Funkendgerät verwendet werden, gefolgt von einem Schritt (54) des Auswählens aus den Hierarchietabellen (T) mindestens einer Ausgangszelle, die diesem Bereich (A) und dem bestimmten "Ursprungs"-Frequenzband entspricht,
- einen Schritt (55) des Generierens aus den Hierarchietabellen einer Liste von so genannten Kandidatenzellen, die einem zweiten System angehören und zu der Ausgangszelle (21, 22) benachbart sind,
- einen Schritt (56) des Auswählens aus der Kandidatenliste mindestens einer Ankunftszelle in Abhängigkeit von mindestens einem Auswahlkriterium.

2. Verfahren nach Anspruch 1, wobei der Schritt (55) des Generierens der Liste von Kandidatenzellen (31, 32) einen Schritt (550) des Berechnens für jede der benachbarten Zellen (31, 32, 33) des zweiten Systems der Überlappungsfläche mit der Ausgangszelle (21, 22) und einen Schritt (552) des Gewichtens der Überlappungsfläche in Abhängigkeit von Geomarketing-Daten, die mit der betreffenden Nachbarzelle (31, 32, 33) verknüpft sind, umfasst.

3. Verfahren nach Anspruch 1 oder 2, wobei der Schritt (55) des Generierens der Liste von Kandidatenzellen (31, 32) einen Schritt (551) des Diskriminierens der benachbarten Zellen (31, 32, 33) des zweiten Systems umfasst, die einen prozentualen Überlappungsanteil mit der Ausgangswelle (21, 22) aufweisen, der geringer ist als eine Prozentsatzschwelle (60), die im Konfigurationsschritt (52) parametriert wird.

4. Verfahren nach einem der Ansprüche 1 bis 3, wobei der Hierarchisierungsschritt (51) für jedes Frequenzband einen Schritt (510) des Erstellens einer ersten digitalen Karte (M1) der besten Dienstzellen (C1) und einer zweiten digitalen Karte (M2) der zweitbesten Dienstzellen (C2) umfasst, wobei die ersten und zweiten Karten (M1, M2) eine Aufteilung in unterschiedliche Bereiche (A) ohne Oberlappung umfassen, um mit einem beliebigen Punkt des Netzes (4) ein einzigartiges Paar aus bester Dienstzelle (C1) und zweitbester Dienstzelle (C2) pro Frequenzband zu verknüpfen.

5. Verfahren nach einem der Ansprüche 1 bis 4, wobei der Schritt (54) des Auswählens einer Ausgangszelle mit einer Vorauswahl aus den Hierarchietabellen (T) der besten Dienstzelle (C1) und mindestens der zweitbesten Dienstzelle (C2), die dem bestimmten "Ursprungs"-Frequenzband und dem Bereich (A) entsprechen, wo sich das Endgerät befindet, beginnt, und dann nur zur Auswahl einer Ausgangswelle (21, 22) führt, wenn der Feldpegel einer vorgewählten Zelle eine erste vorbestimmte Schwelle (61) überschreitet.

6. Verfahren nach einem der Ansprüche 1 bis 5, wobei der Schritt (56) des Auswählens von Ankunftszellen einen Schritt (560) des Bestätigens der Kandidatenzellen (31, 32) durch einen Vergleich des Feldpegels jedes dieser Kandidaten mit einer zweiten vorherbestimmten Schwelle (62) umfasst, um nur zur Auswahl einer Ankunftszelle zu gelangen, wenn der Feldpegel eines der Kandidaten (31, 32) die zweite Schwelle (62) überschreitet.

7. Verfahren nach einem der Ansprüche 1 bis 6, wobei der Modellierungsschritt (50) eine Aufteilung umfasst, welche die Zellen des zellularen Funktelefonnetzes auf ein erstes System von der Art GSM mit mindestens zwei verschiedenen Frequenzbändern und ein zweites System von der Art W-CDMA mit mindestens einem Frequenzband verteilt.

8. Verfahren nach einem der Ansprüche 1 bis 7, **dadurch gekennzeichnet, dass**, wenn das zweite System verschiedene Frequenzbänder bereitstellt, eine Prioritätsstufe (70, 71, 72), die in einem Prioritätsdefinitionsschritt (550) definiert wird, mit jedem der Frequenzbänder dieses zweiten Systems verknüpft wird, um als Auswahlkriterium bei dem Schritt (56) des Auswählens aus der Liste von Kandidatenzellen (31, 32) zu dienen.

9. Verfahren nach einem der Ansprüche 5 bis 8, **dadurch gekennzeichnet, dass** es einen ersten Vergleichsschritt (541) umfasst, um mit einer ersten vorherbestimmten Höchstversatzschwelle (63) den Feldpegelunterschied zwischen der besten Dienstzelle (C1) und der zweitbesten Dienstzelle (C2), die bei dem Schritt (54) des Auswählens aus den Hierarchietabellen vorgewählt wurden, zu vergleichen, wobei die Überschreitung dieser ersten Höchstschwelle (63) einen Schritt (542) des Eliminierens der zweitbesten Dienstzelle (C2) auslöst, um als Ausgangszelle (21, 22) die beste Dienstzeite (C1) zu wählen.

10. Verfahren nach einem der Ansprüche 1 bis 9, **dadurch gekennzeichnet, dass** es einen zweiten Vergleichsschritt (561) umfasst, der mindestens ein Frequenzband des zweiten Systems betrifft, um mit einer zweiten vorherbestimmten Höchstversatzschwelle (64) den Feldpegelunterschied zwischen der besten Dienstzelle (C1) und der zweitbesten Dienstzelle (C2), die aus der Liste von Kandidatenzellen (31, 32) entnommen wurden, zu vergleiche, wobei die Überschreitung dieser zweiten Höchstschwelle (64) einem Nicht-Auswahlkriterium entspricht, das einen Schritt (562) des Eliminierens dieser zweitbesten Zelle (C2) beim Schritt (56) des Auswählens der Ankunftszellen auslöst.

11. Verfahren nach einem der Ansprüche 3 bis 10, wobei der Schritt (55) des Generierens der Liste von Kandidatenzellen (31, 32) sich auf eine bestimmte Schwellenanzahl (65) von Kandidatenzellen (31, 32) beschränkt, die bei einem zweiten Parametrierungsschritt (502) parametriert wird.

12. Verfahren nach einem der Ansprüche 1 bis 11, wobei der Schritt (55) des Generierens der Liste von Kandidatenzellen (31, 32) einen Schritt (553) des Erfassens von Zellen umfasst, die dem zweiten System angehören und aus demselben Standort oder Sende-/Empfangs-Sektor wie die Ausgangszelle (21, 22) stammen.

13. Verfahren nach einem der Anspruche 2 bis 12, wobei der Berechnungsschritt (550) einen Mindestfeldpegel (66) berücksichtigt, um die Überlappungsfläche jeder der benachbarten Zellen (31, 32, 33) zu definieren, wobei der Schritt (552) des Gewichtens der Überlappungsfläche einen Gewichtungskoeffizienten berücksichtigt, der für die Art der Bebauung und/oder der Verkehrsdichte in der Zelle repräsentativ ist.

14. Verfahren nach einem der Ansprüche 1 bis 13, wobei der Schritt (56) des Auswählens aus der Kandidatenliste (31, 32) als Auswahlkriterium den Abstand zwischen dem Standort oder dem Sektor, der die Kandidatenzelle generiert, und der Position des Funkendgeräts verwendet.

15. Verfahren nach einem der Ansprüche 1 bis 14, wobei die ausgewählten Ankunftszellen in einer Liste von Ankunftszellen zusammengefasst werden, die eine bestimme Einordnung in Abhängigkeit von den Auswahlkriterien umfasst.

16. EDV-Anlage (1) zum Durchführen des Verfahrens nach einem der Ansprüche 1 bis 15, umfassend Speichermittel (10), Berechnungsmittel (11) und erste Auswahlmittel (12), wobei die Speichermittel. (10) in einem ersten Speicher (101) Daten umfassen, die für geografische Bereiche repräsentativ sind, die von einem zellularen Radiotelefonnetz (4) abgedeckt werden und in eine Vielzahl von Punkten oder Pixeln unterteilt sind, in einem zweiten Speicher (102) Daten umfassen, die für eine Aufteilung des Netzes (4) in eine Vielzahl von Funkzellen (20, 30) repräsentativ sind, die auf zwei verschiedene Generierungssysteme verteilt sind, wobei die Aufteilung die Frequenzbänder unterscheidet, die in jeder der Zellen (20, 30) verwendet werden, und in einem dritten Speicher (103) Abdeckungsdaten an jedem Punkt des Netzes (4) umfassen, wobei die Anlage (1) **dadurch gekennzeichnet ist, dass** sie Folgendes umfasst:
- interaktive Mittel (100) zwischen dem Benutzer und der Anlage (1), zum die Eingabe von Berechnungsparametern zu ermöglichen, wobei die Speichermittel (10) die Berechnungsparameter in einer Konfigurationsdatei (104) speichern,
- Mittelt (13) zum Abrufen und Tabellieren ausgehend von den Abdeckungsdaten, um Hierarchietabellen (T) zu generieren, welche die Daten der besten Dienstzelle und mindestens der zweitbesten Dienstzelle für jedes Frequenzband innerhalb der Funkzellenbereiche des aufgeteilten Netzes (4) übernehmen,
- Informationszusammenstellungsmittel (14), um die Position in dem Netz und das "Ursprungs"-Frequenzband von bimodalen mobilen Funkendgeräten zu bestimmen, wobei die ersten Auswahlmittel (12) angeordnet sind, um die Positions- und Frequenzbanddaten, die von den Informationszusammenstellungsmitteln (14) für ein Funkendgerät zusammengestellt wurden, zu verwenden, um aus den Hierarchietabellen (T) mindestens eine Ausgangszelle (21, 22) auszuwählen, die mit diesem Funkendgerät in einem ersten System verknüpft ist und dem "Ursprungs"-Frequenzband entspricht,
- ein Generierungsmodul (110), das den Berechnungsmitteln (11) zur Verfügung steht und dazu geeignet ist, um die Aufteilungsdaten und die Hierarchietabellen (T) des Netzes zu verwenden, um eine Liste von so genannten Kandidatenzellen (31, 32) zu generieren, die einem zweiten System angehören und zu der Ausgangszelle (21, 22) benachbart sind, wobei die Berechnungsmittel (11) zweite Auswahlmittel (15) umfassen, um aus der Kandidatenliste (31, 32) mindestens eine Ankunftszeite in Abhängigkeit von mindestens einem Berechnungsparameter der Konfigurationsdatei auszuwählen.

17. Anlage nach Anspruch 16, wobei das Generierungsmodul (110) angeordnet ist, um aus den Hierarchietabellen (T) eine vorläufige Liste von Zellen (31, 32, 33) des zweiten Systems auszuwählen, die zu der Ausgangswelle benachbart sind, und um die Überlappungsfläche mit der Ausgangszelle jeder dieser benachbarten Zellen zu berechnen, wobei das Generierungsmodul (110) ferner dazu geeignet ist, Geomarketing-Daten zu verwenden, die aus Abdeckungsdaten stammen, um die berechnete Überlappungsfläche zu gewichten.

18. Anlage nach Anspruch 16 oder 17, wobei das Generierungsmodul (110) über ein Vergleichsmodul (111) der Berechnungsmittel (11) verfügt, das es ermöglicht, benachbarte Zellen des zweiten Systems zu diskriminieren, die einen prozentualen Überlappungsanteil mit der Ausgangszelle aufweisen, der geringer als eine Prozentsatzschwelle (60) ist, die in der Konfigurationsdatei (104) parametriert wird.

19. Anlage nach einem der Ansprüche 16 bis 18, wobei die ersten Auswahlmittel (12) über ein Vergleichsmodul (111) der Berechnungsmittel (11) verfügen, um die Auswahl einer Ausgangswelle (21, 22) für ein bestimmtes Frequenzband nur zu ermöglichen, wenn der entsprechende Feldpegel eine erste vorherbestimmte Schwelle (61) überschreitet, die in der Konfigurationsdatei (104) parametriert ist.

20. Anlage nach einem der Ansprüche 16 bis 19, wobei die zweiten Auswahlmittel (15) über ein Vergleichsmodul (111) der Berechnungsmittel (11) verfügen, um Kandidatenzellen durch einen Vergleich des Feldpegels jedes dieser Kandidaten mit einer zweiten vorherbestimmten Schwelle (62) zu bestätigen, die in der Konfigurationsdatei (104) parametriert ist, wobei die zweiten Auswahlmittel (15) nur eine Ankunftszelle auswählen, wenn der Feldpegel eines der Kandidaten die zweite Schwelle (62) überschreitet.

21. Anlage nach einem der Ansprüche 16 bis 20, wobei die Netzdaten (4), die in den Speichermitteln (10) gespeichert sind, eine Aufteilung darstellen, welche die Zellen des zellularen Radiotelefonnetzes (4) auf ein erstes System von der Art GSM mit mindestens zwei verschiedenen Frequenzbändern und ein zweites System von der Art W-CDMA mit mindestens einem Frequenzband verteilen.

22. Anlage nach einem der Ansprüche 16 bis 21, wobei die zweiten Auswahlmittel (15) angeordnet sind, um unter den Kandidatenzellen eine Prioritätsstufe eines Frequenzbandes zu unterscheiden, wobei die Konfigurationsdatei (104) die Speicherung von Berechnungsparametern bereitstellt, die für eine Prioritätsstufe (70, 71, 72) für jedes der Frequenzbänder repräsentativ sind.

23. Anlage nach einem der Ansprüche 16 bis 22, wobei die ersten Auswahlmittel (12) dazu geeignet sind, die Positions- und Frequenzbanddaten zu verwenden, die von den Informationszusammenstellungsmitteln (14) zusammengestellt werden, um die entsprechenden besten und zweitbesten Dienstzellen auszuwählen, und ferner über ein Vergleichsmodul (111) der Berechnungsmittel (11) verfügen, um eine erste vorherbestimmte Höchstversatzschwelle (63), die in der Konfigurationsdatei (104) parametriert wird, mit dem Feldpegelunterschied zwischen der besten Dienstzelle (C1) und der zweitbesten Dienstzelle (C2) zu vergleichen, wobei die ersten Auswahlmittel (12) angeordnet sind, um als Ausgangszelle (21, 22) nur die beste Dienstzelle (C1) im Falle einer Überschreitung dieser ersten Höchstschwelle (63) auszuwählen.

24. Anlage nach einem der Ansprüche 16 bis 23, wobei die zweiten Auswahlmittel (15) über ein Vergleichsmodul (111) der Berechnungsmittel (11) verfügen, um aus den Kandidatenzellen die zweitbesten Dienstzellen (C2) durch einen Vergleich des Feldpegelunterschieds zwischen der besten Dienstzelle (C1) und der zweitbesten Dienstzelle (C2) eines selben Frequenzbandes mit einer zweiten vorherbestimmten Höchstversatzschwelle (64), die in der Konfigurationsdatei (104) parametriert wird, zu diskriminieren.

25. Anlage nach einem der Ansprüche 16 bis 24, wobei die Konfigurationsdatei (104) einen Parameter zum Beschränken auf eine bestimmte Anzahlschwelle (65) der Liste von Kandidatenzellen (31, 32) umfasst, wobei das Generierungsmodul (110) diesen Begrenzungsparameter verwendet, um eine Liste bereitzustellen, welche die bestimmte Anzahl von Kandidatenzellen aufweist.

26. Anlage nach einem der Ansprüche 16 bis 25, wobei die Konfigurationsdatei (104) einen Parameter zum Auswählen von Zellen umfasst, die im Verhältnis zu der Ausgangszelle gemeinsame Standorte oder gemeinsame Sektoren aufweise, wobei das Generierungsmodul (110) angeordnet ist, um auf der Liste von Kandidatenzellen Zellen einzufügen, die zu dem zweiten System gehören und aus demselben Standort oder Sende-/Empfangs-Sektor wie die Ausgangszelle stammen.

27. Anlage nach einem der Ansprüche 16 bis 26, wobei das Generierungsmodul (110) angeordnet ist, um einerseits einen Mindestfeldpegel, der in der Konfigurationsdatei (104) parametriert ist, bei der Berechnung der Überlappungsflächen, und andererseits einen Gewichtungskoeffizienten, der in der Konfigurationsdatei (104) parametriert ist und für die Art der Bebauung und/oder der Verkehrsdichte in der Zelle repräsentativ ist, um die Überlappungsfläche mit dem Gewichtungskoeffizienten zu multiplizierten, zu berücksichtigen.

28. Anlage nach einem der Ansprüche 16 bis 27, wobei die Konfigurationsdatei (104) einen Parameter zum Auswählen bezüglich der Entfernung zwischen dem Standort oder dem Sektor, der die Kandidatenzelle und die Position des Funkendgerät generiert, umfasst.

29. Anlage nach einem der Ansprüche 16 bis 28, wobei die Berechnungsmittel (11) angeordnet sind, um auf bestimmte Art und Weise die Ankunftszellen in Abhängigkeit von Parametern der Konfigurationsdatei einzuordnen.
